(19) Europäisches Patentamt
European Patent Office
Office européen des brevets

(11) **EP 3 015 809 B1**

(12) **EUROPEAN PATENT SPECIFICATION**

(45) Date of publication and mention
of the grant of the patent:
**31.07.2019 Bulletin 2019/31**

(51) Int Cl.:
*F28F 3/04* *(2006.01)*     *F28D 9/00* *(2006.01)*

(21) Application number: **15184729.0**

(22) Date of filing: **10.09.2015**

(54) **A PLATE HEAT EXCHANGER**

PLATTENWÄRMETAUSCHER

ÉCHANGEUR THERMIQUE DE PLAQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2014 DK 201400635**

(43) Date of publication of application:
**04.05.2016 Bulletin 2016/18**

(73) Proprietor: **Danfoss A/S**
**6430 Nordborg (DK)**

(72) Inventors:
• **PERSSON, Lars**
**550014 Guizhou (CN)**
• **THORSEN, Jan Eric**
**6440 Augustenborg (DK)**

(74) Representative: **Inspicos P/S**
**Kogle Allé 2**
**2970 Hørsholm (DK)**

(56) References cited:
**EP-A1- 0 650 024     EP-A2- 2 455 694
EP-A2- 2 455 695     US-B1- 6 221 463**

Printed by Jouve, 75001 PARIS (FR)

**Description**

INTRODUCTION

The present invention relates to a heat exchanger of the kind where a plurality of plates is stacked and where they, due to surface structures, form flow paths between neighboring plates.

Particularly, the invention relates to a plate heat exchanger where the plates define a first set of dimples and a second set of dimples in opposite directions. The dimples of the first set of dimples form a first set of contact faces each being arranged against a contact face of an adjacent plate, and the dimples of the second set of dimples form a second set of contact faces each arranged against a contact face of an adjacent plate.

BACKGROUND OF THE INVENTION

A plate heat exchanger uses plates to transfer heat between two media, typically fluids flowing in separated first and second flow paths. Compared with a conventional heat exchanger, the fluids are exposed to a large surface area defined by the surfaces of the plates. This increases the exchange of thermal energy between the fluids.

Plate heat exchangers are common for hot water boilers, and particularly for instantaneous preparation of domestic hot water etc.

Important considerations are thermal exchange, flow resistance, price, size, and durability.

The flow paths each connects to either a primary or a secondary fluid connection e.g. for supplying heating fluid or domestic hot water. The first and second flow paths are on opposite sides of the plates, and the plates come with a number of different structures such as fishbone or herringbone corrugations. When stacking fishbone heat exchanger plates, taken as an example, they are positioned such that they connect in crossing points of the corrugations and as the corrugations form relatively sharp pointed tops, the contact area between tops of adjacent plates becomes small and less well defined.

US6221463 discloses a structured three-dimensional film having a regular pattern of depressions and raised portion and having select properties. The thin film structures are stacked with corresponding flattened peaks aligned to form points of adhesion. The resulting multi-layer structure creates a porous network of passages, separated by the film to provide for at least two fluid chambers and passageways to permit heat exchange between the fluid therein. US6221463 discloses a plate heat exchanger and a plate for a plate heat exchanger according to the preambles of claims 1 and 14 respectively.

EP0650024 discloses tube elements which can be used in a laminated heat exchanger. This document relates to optimal dimensional relationship among bead size, bead spacing, tube element thickness and formed plate thickness when considering the balance between passage resistance and exchange performance.

EP2455694 relates to a plate heat exchanger comprising heat exchanger plates having indentations placed against corresponding indentations of another heat exchanger plate. The shape of the channels between the plates provides variation in flow rate through the heat exchanger, thereby resulting in a higher heat transfer rate.

A small contact area is desirable since there is no direct heat transfer at these contact areas. The contact areas, on the other hand, absorb the forces of the plates and thereby counteract the pressure of the fluids in the first and second flow paths.

If the contact areas are too small, the reduced strength must be compensated by increased plate thickness to prevent deformation. Typically, the plates have a thickness of 0.4 mm or more. The heat transfer is generally reduced with increasing plate thickness.

The concept of the dimple pattern makes it possible to design contact areas with well-defined areas, and thus well-defined and optimized strength and hydraulic characteristics.

Due to the reduced speed variation of the media when passing through the heat exchanger profile, the profile height for the dimple pattern can be reduced by typically 30% compared to the traditional herring bone pattern and still maintaining the same pressure drop. The reduced profile height results in approximately twice the number of brazing points, thus increasing the strength. Alternatively, thinner plates can be applied.

Furthermore, the reduced speed variation of the media when passing through the heat exchanger leads to a higher convective heat transfer ratio for a given pressure loss. This enables the design of a well-defined brazing area without reducing the overall performance of the dimple pattern based heat exchanger.

The benefit of oval dimples are increased dimple circumference, leading to higher strength, and at the same time reduced contact area, leading to increased heat transfer area and thus increased overall efficiency.

A further drawback of the herring bone corrugations is that they lead the fluids in a zig-zag-shaped path which creates an undesired resistance and pressure drop.

DESCRIPTION OF THE INVENTION

It is an object of the invention to provide a plate heat exchanger with good thermal conductivity, good strength to weight ratio, and to provide a plate heat exchanger which is easy to manufacture and which is durable.

In a first aspect, the invention provides a plate heat exchanger with dimples arranged in a matrix pattern with a distance X1 between centers of dimples in adjacent rows and a distance X2 between centers of dimples in adjacent columns, where the dimples have a circumference C and where C/X1 is in the range of 1,03-2,27, such as in the range of 1,1-2,3. Correspondingly, C/X2 may preferably also be in the range of 1,1-4,32, such as in the range of 1,2-4,0.

By the claimed range, the present invention surprisingly provides a heat exchanger plate with high strength and particularly a high strength to weight and cost factor.

The invention especially is related to gasket exchangers where the stack of heat exchanger plates are held together by an external force, such as when squeezed between top and bottom plates being fixed by bolts, and is based on the discovery that the essential in the building a strong heat exchanger the essential is not the surface area if the tops respectively bottoms of the dimples, but rather the length of their circumference. The invention, however, may also be applied where the plates are joined adhesively. The heat exchanger may particularly comprise plates with a thicknesses below 0,30mm. In this case the strength of the dimple circumference typically becomes critical compared to the strength of the flat dimple areas.

Herein, a matrix pattern is a two-dimensional table-like pattern of rows and columns, it may particularly be parallel rows and parallel columns, and it may particularly be rows being perpendicular to the columns.

By definition, each dimple may form a distance, $r1$ from its center to the edge of its contact face in the shortest direction towards the center of a dimple in the adjacent row. In the embodiment where the rows are perpendicular to the columns, the shortest direction would be the straight-line direction from the center of number n dimple in one row to the center of number n dimple in the directly adjacent row.

By definition, each dimple form a distance, $r2$ from its center to the edge of its contact face in the shortest direction towards the center of a dimple in the adjacent column. In the embodiment where the rows are perpendicular to the columns, the shortest direction would be the straight line direction from the center of number n dimple in one column to the center of number n dimple in the directly adjacent column.

Particularly, it has been found that C/x1 advantageously could be selected to be between an upper and a lower boundary, the upper boundary being defined by a function of $-0,2*(r1/r2) +2,4$, and the lower boundary being defined by a function of $-0,03*(r1/r2) + 1,23$.

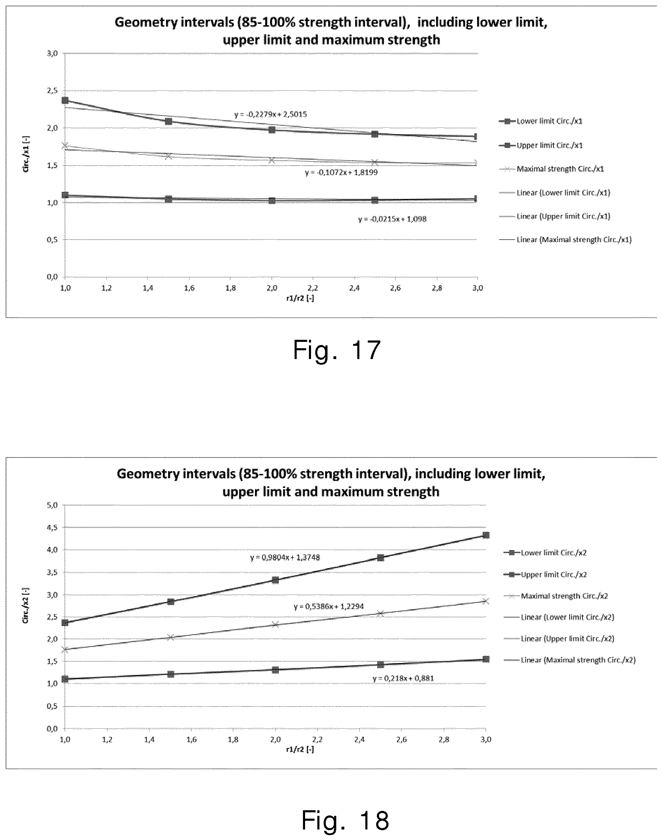

Table 1, c.f. Fig. 17 illustrates different strength intervals which are all applicable according to the invention.

In another embodiment, C/x2 could be selected to be between an upper and a lower boundary, the upper boundary being defined by a function of $0,9*(r1/r2) +1,36$, and the lower boundary being defined by a function of $0,27*(r1/r2) + 0,95$.

Each contact face of the first set of contact faces may form at least a first and a second perpendicular axis of symmetry thereby defining the dimples e.g. with a circular or an elliptical shape. Particularly, the axes of symmetry could have different length, e.g. in the range of up to 1:4 such as 1:3 or 1:2 thereby defining e.g. an elliptic shape.

The contact faces of the first set of contact faces could be arranged against the contact faces of a second set of contact faces of the adjacent plate, and all of the plates could be identical.

In a second aspect, the invention provides a plate for a plate heat exchanger, the plate defining a first set of dimples and a second set of dimples in opposite directions, each dimple of the first set of dimples forming a first contact face arranged against a contact face of an adjacent plate, and each dimple of the second set of dimples forming a second contact face arranged against a contact face of an adjacent plate, the dimples being arranged in a matrix pattern with a distance X1 between centers of dimples in adjacent rows and a distance X2 between centers of dimples in adjacent columns, where the dimples have a circumference C and where C/X1 is in the range of 1,1-2,3.

With the definitions applied to the heat exchanger according to the first aspect of the invention, C/x1 may preferably be selected to be between an upper and a lower boundary, the upper boundary being defined by a function of $-0,2*(r1/r2) +2,4$, and the lower boundary being defined by a function of $-0,03*(r1/r2) + 1,23$. C/x2 could be selected to be between an upper and a lower boundary, the upper boundary being defined by a function of $0,9*(r1/r2) +1,36$, and the lower boundary being defined by a function of $0,27*(r1/r2) + 0,95$.

In a third aspect, the invention provides a method of designing a plate heat exchanger having a plurality of plates, each defining a first set of dimples and a second set of dimples in opposite directions, each dimple of the first set of dimples forming a first contact face arranged against a contact face of an adjacent plate, and each dimple of the second set of dimples forming a second contact face arranged against a contact face of an adjacent plate, characterized in that the dimples are arranged in a matrix pattern with a distance X1 between centers of dimples in adjacent rows and a distance X2 between centers of dimples in adjacent columns, where the dimples have a circumference C and where C/X1 is in the range of 1,1-2,3.

Again, with the definitions applied to the heat exchanger according to the first aspect of the invention, C/x1 may preferably be selected to be between an upper and a lower boundary, the upper boundary being defined by a function of $-0,2*(r1/r2) +2,4$, and the lower boundary being defined by a function of $-0,03* (r1/r2) + 1,23$. C/x2 could be selected to be between an upper and a lower boundary, the upper boundary being defined by a function of $0,9*(r1/r2) +1,36$, and the lower boundary being defined by a function of $-0,27*(r1/r2) + 0,95$.

BRIEF DESCRIPT OF THE DRAWINGS

Fig. 1 illustrates a perspective view of a heat exchanger according to the invention;

Fig. 2 illustrates in a top view, a plate heat exchanger according to the invention;

Fig. 3 illustrates a plate for a heat exchanger;

Fig. 4 illustrates a stack of plates in a sideview;

Figs. 5 and 6 illustrate quadrangular portions of one plate;

Figs. 7-9 illustrate calculations for three different r1/r2 ratios;

Figs. 10-12 illustrate calculations for circumference/x1 and circumference/x2;

Fig. 13 illustrates upper and lower limits of the r1/a-values;

Fig. 14 illustrates upper and lower limits of the circumference/a-values;

Figs. 15-20 illustrate values of circumference/x1 and circumference/x2, respectively, for different strength intervals;
and

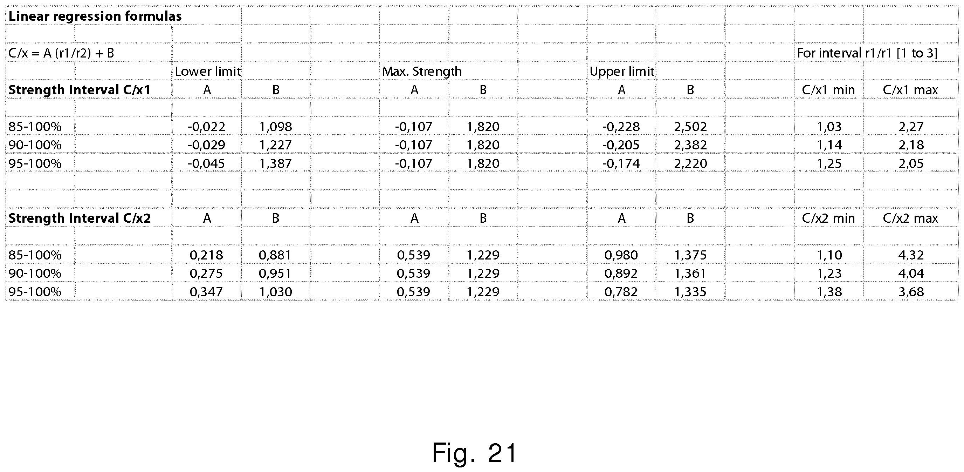

Fig. 21 comprises a table with different strength intervals which are all applicable according to the invention.

DETAILED DESCRIPTION OF THE DRAWINGS

It should be understood that the detailed description and specific examples, while indicating embodiments of the invention, are given by way of illustration only, since various changes and modifications within the spirit and scope of the invention will become apparent to those skilled in the art from the detailed description.

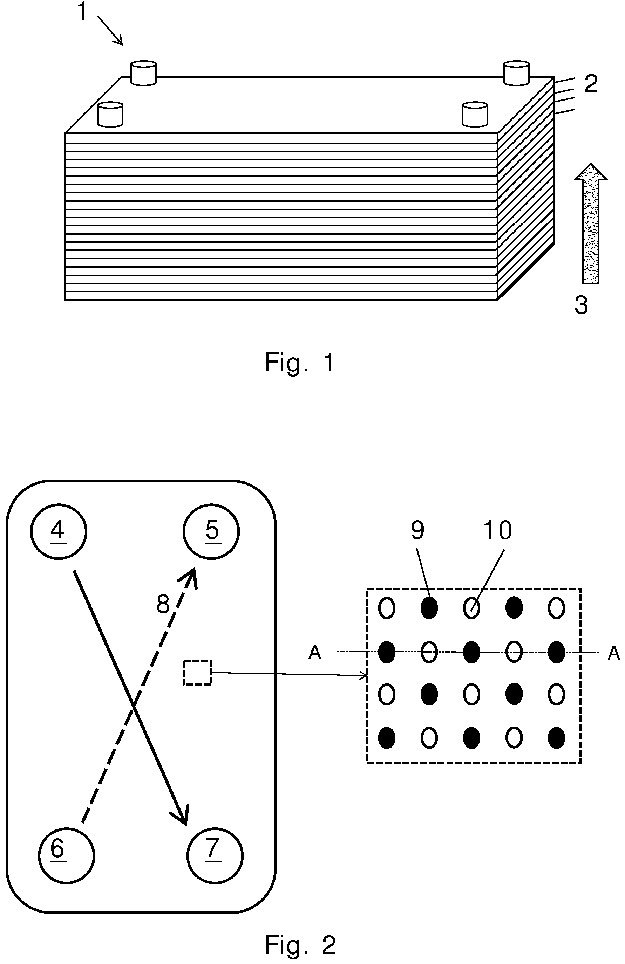

Fig. 1 illustrates a plate heat exchanger 1 comprising a plurality of heat exchanger plates 2 which are stacked in a stacking direction visualized by the arrow 3. The heat exchanging plates are stacked with tops against bottoms.

Fig. 2 illustrates the heat exchanger in a top view. The heat exchanger plate has four corner openings 4, 5, 6, 7 for connecting to the fluid connections such that two openings 4, 7 connect a first fluid supply to an upper side of the plate by an inlet and an outlet - an overall flow direction from the inlet to outlet is illustrated by the solid arrow. A second supply is connected to the two openings 6, 5 on the lower side of the plate. An overall flow direction from the inlet to the outlet is illustrated by the slashed arrow. The flow is cross-counter flow. Also counter flow is an option, where 4+6 and 7+5 are connected.

A dimple structure with dimple tops and bottoms is illustrated by the white and black oval marks 9, 10. The dimples protrude in opposite directions. The plates could e.g. be made from a planar plate which is deformed by stamping to form the dimples extending in opposite directions relative to the central plane of the original planar plate.

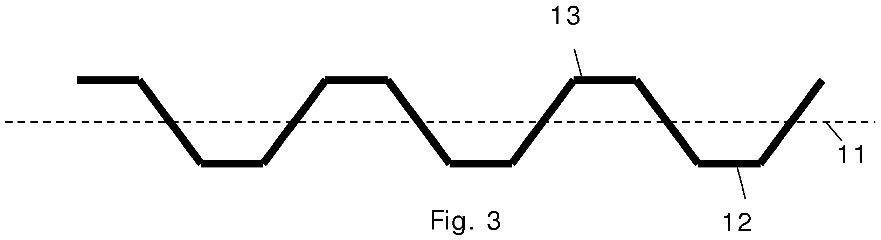

Fig. 3 illustrates a single plate. The fictive plane marked with numeral 11 illustrates a central plane defined by each of the plates. The plate forms a first set of dimples 12 and a second set of dimples 13. The first and second sets of dimples extend from the fictive central plane in opposite directions away from the central plane. The plates and thus the dimples can be manufactured by pressing a thin plate of metal, e.g. stainless steel, aluminum, cobber, brass or zinc or plastic into the desired shape, e.g. in a die. The plates can also be made by molding, e.g. by pressure molding of plastic in a mold or die.

Fig. 3 illustrates a side view and the dimples could have top surfaces of any shape, e.g. an elliptical shaped design of dimples according to the embodiment of illustration of the present invention. Other shapes may apply, e.g. super-elliptically, rectangular etc. as long as they have a well-defined extension in a first direction and a well-defined extension in a second direction being orthogonal to the first direction.

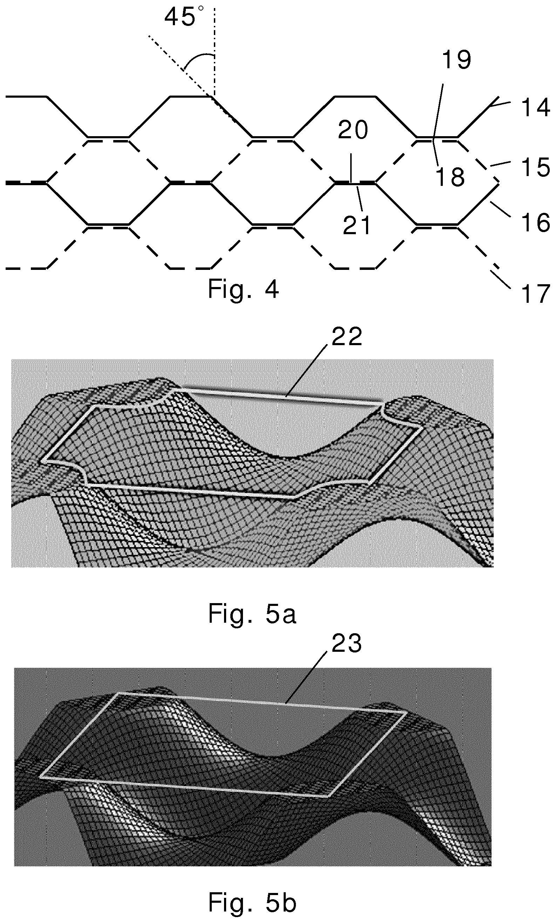

Fig. 4 shows 4 plates 14, 15, 16, 17 and illustrates how dimple tops 18 are placed against dimple bottoms 19 of an upper neighboring plate and in the same manner that dimple bottoms 20 are connected to dimple tops 21 of the lower neighboring plate.

Fig. 4 also illustrates that the side walls of the dimples are roughly 45 degrees, c.f. the angle indication. In this way, the top and bottom dimples are as close as possible to each other. This leads to a higher number of dimples and to a higher strength. The angle of 45 degrees is limited by e.g. the maximum elongation of the stainless steel material. For practical reasons, e.g. due to tolerances of the pressing tools, a smaller angle is often applied. The walls are smoothly formed by free floating of the material without sharp edges and without flat or plane plate sections except from those appearing at the dimple tops and dimple bottoms, i.e. where one plate meet an adjacent plate.

Any such additional flat section would have created weak sections and could have allowed a pressure difference between fluids in the first and second paths to deform the plates - potentially, plates could bulge and crack at the edges. There is no pressure gradient over the connected tops and bottoms as the same fluids flow with the same pressures at the opposing sides of the connections.

The structure illustrated in Fig. 4 enables a reduced plate thickness. Due to the absence of edges and flat sections between dimple tops and bottoms the pressures are directed into the dimple walls in a manner where they are absorbed essentially without plastic deformation. Further, all the connections have enlarged contact areas relative to the fishbone structures and the pressure-forces are therefore distributed over a larger area.

One drawback is, however, that the relatively large contact areas reduce the thermal distribution from one path to the other. This drawback is counteracted by an increased convective heat transfer for a given pressure loss and the ability to reduce the plate thicknesses which again contributes to an increased heat transfer.

In the plate heat exchanger shown in Fig. 4, each of the plates of the type shown in Fig. 3 are arranged such that the dimples of the first set of dimples form a first contact face arranged against contact faces of an adjacent plate, and such that the dimples of the second set of dimples form a second contact face arranged against a contact face of an adjacent plate.

Fig. 5a illustrates a quadrangular portion of one plate. The quadrangular portion is marked with the white line 22 representing the pressurized area, which has to be carried by the 4xquarter dimples. In this portion, the contact faces of the dimples of the first set of dimples constitute 4 times a quarter of the area of the contact area formed by one single dimple, i.e. in total the area of one complete dimple but split into four equally large sections of a contact face.

The contact faces of adjacent plates are typically joined adhesively or by welding, or the plates could simply be pressed towards each other, e.g. by a frame extending about the edge of the plates etc.

Fig. 5b illustrates the matrix pattern within the quadrangular portion marked with line 23.

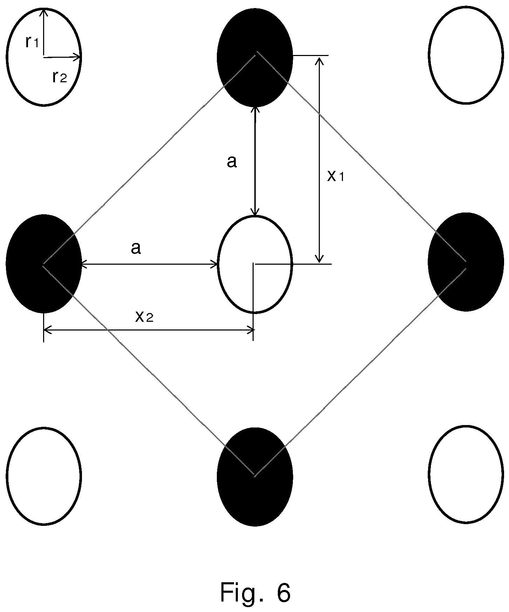

In Fig. 6, the distances X1 and X2 between centers of dimples in adjacent rows and between centers of dimples in adjacent columns are indicated. The black dimples extends upwards, and the white dimples extend in the opposite downwards direction.

Fig. 6 further illustrates a parameter, 'a' which is the edge to edge distance between a two neighboring dimples (neighboring dimples being respectively a dimple top and dimple bottom) in a first or second direction. 'r1' and 'r2' are the extensions of the top/bottom surfaces from their center to the edge seen in the first and second directions respectively, in the illustrated example with elliptically shaped top/bottom surfaces this corresponds to the two radiuses, the first and second corresponding to the longest and shortest extension respectively. In most embodiments, this will define the first and second directions. The value of 'a' can be different for the distance between the dimple rows and columns.

The lines connecting the four black ellipses form a rectangle or rhombus in case r1/r2 is different from 1. The area within this rectangle may be referred to a 'heat transfer cell', where this heat transfer cell then comprises a dimple top and four quarter dimple bottoms not contributing to the heat transfer.

Using elliptically shaped top/bottom areas as the shape for calculation, the formulas for calculating the maximum pressure the cell can withstand becomes:
Area of ellipse:

$$A = \pi r_1 r_2$$

Circumference of ellipse based on Ramanujan, first approximation:

$$C = \pi(3(r_1 + r_2) - \sqrt{(r_1 + 3r_2)(3r_1 + r_2)})$$

Strength of circumference:

$$s = tC\sigma$$

Where t is the plate thickness, C is the dimple circumference and $\sigma$ is the plate material strength.

Pressurized area for one cell:

$$A_p = 2X_1X_2 - \pi r_1 r_2$$

The maximum pressure the cell can withstand is then given by:

$$P_{max} = \frac{strength}{Pressurized\ area} = \frac{s}{A_p}$$

For the special case where a is the same value for the orientation of the rows and columns:

$$X_1 = 2r_1 + a\ and\ X_2 = 2r_2 + a$$

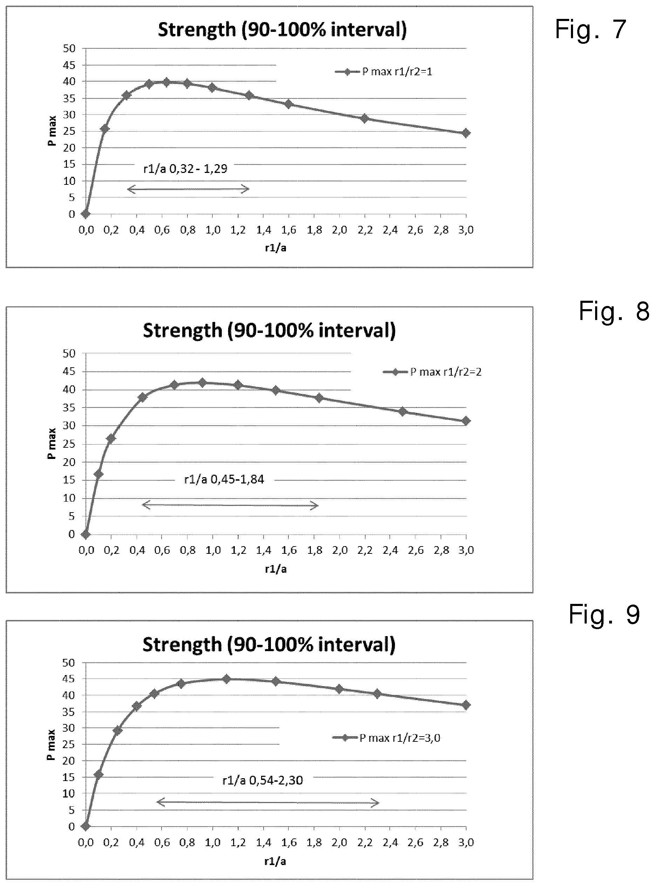

Figs. 7-9 show these calculations for three different r1/r2 ratios (r1/r1 = 1, 2 and 3) in dependence to r1/a, and as can be seen all show a maximum value at individual r1/a values. It is however not always an advantage to design according to the maximum. An allowed range around the maximum which is set to the range of r1/a being within 90%-100% of the maximum value, each giving an upper and lower limit of r1/a and r2/a.

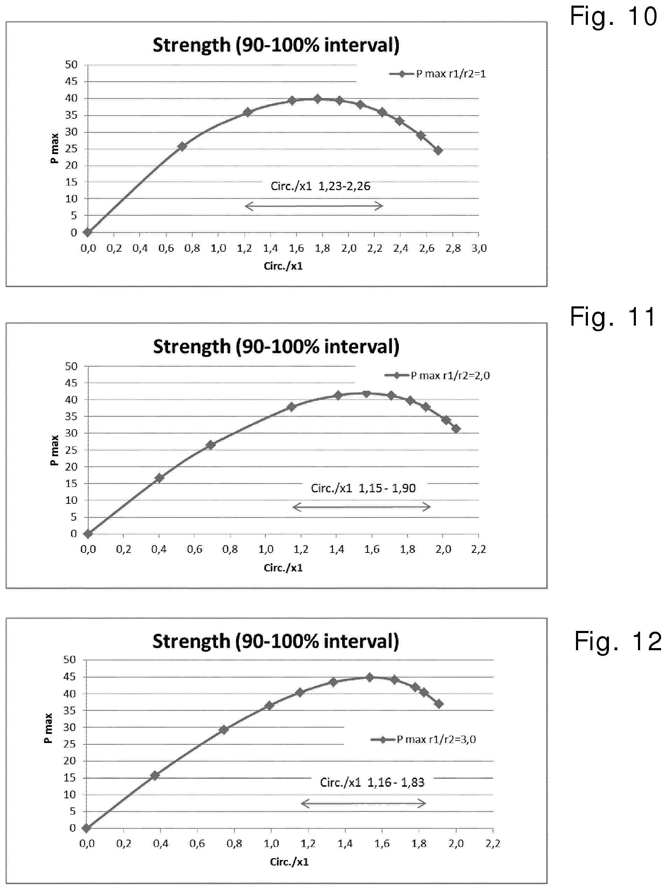

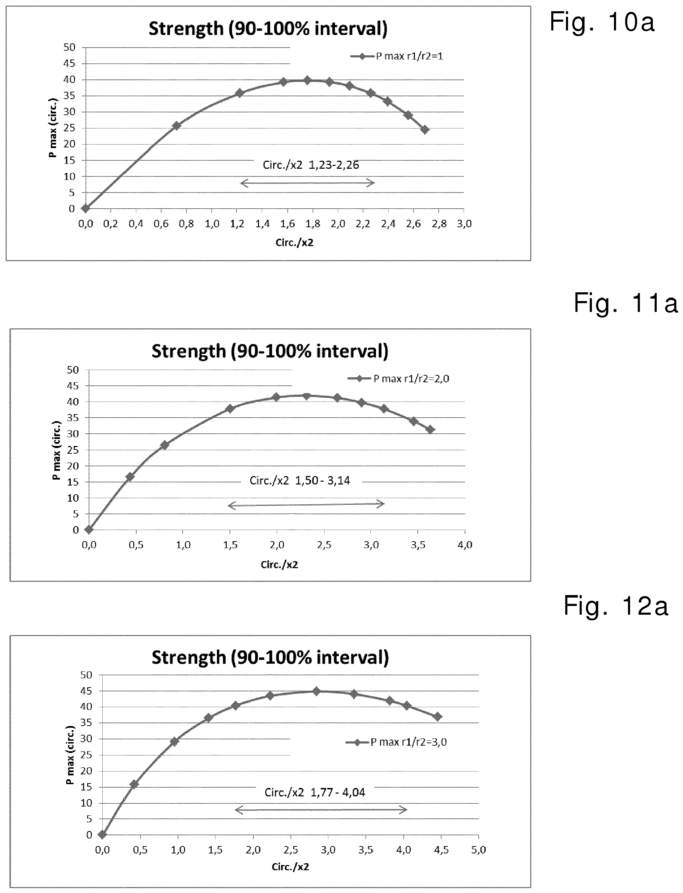

Figs. 10-12 show the similar plot but now generalized the circumference/x1.

Given there is sufficient distance to the forces it needs to withstand, then other aspects also influences the final design, such as the heat transfer efficiency of the plates working against increasing areas of the top/bottom dimple surfaces. The next step therefore is to define an allowed range around the maximum which is set to the range of r1/a being within 90%-100% of the maximum value, each giving an upper and lower limit of r1/a and r2/a.

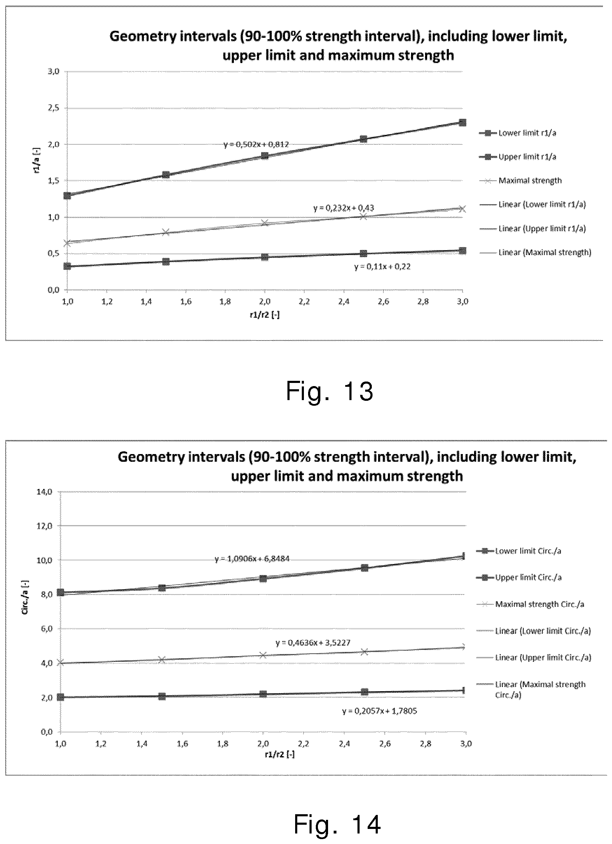

Fig. 13 shows the upper and lower limits of the r1/a-values and implicit also r2/a, as well as the geometry for maximum strength, for different r1/r2 designs, where Fig. 14 shows the same, seen as circumference/a as a function of r1/r2.

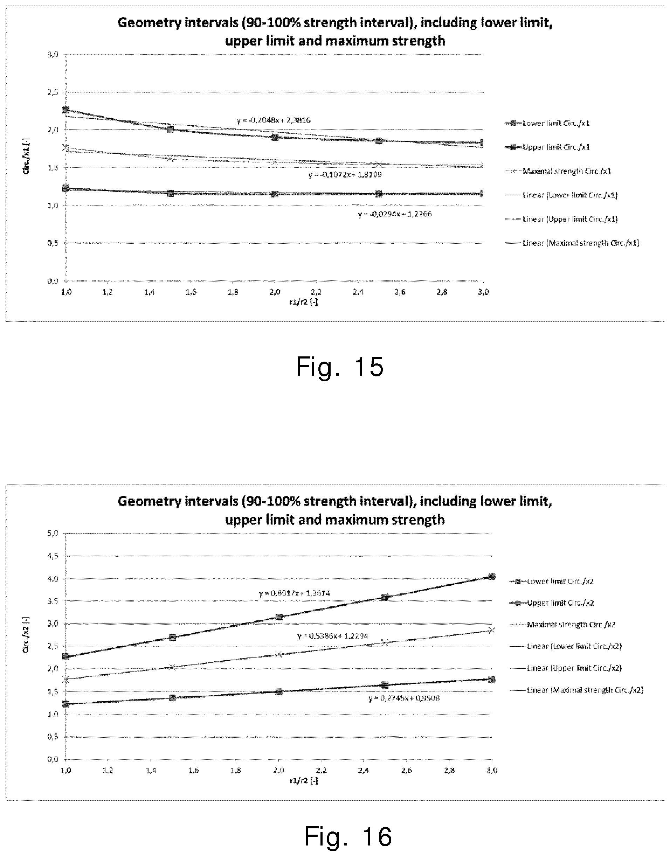

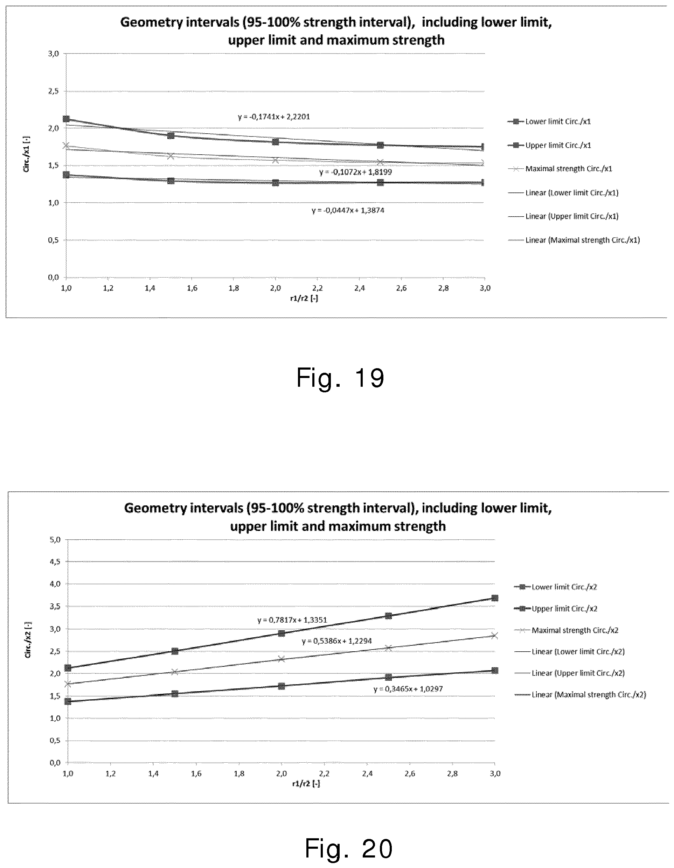

Figs. 15 - 20 show the values as circumference/x1 and circumference/x2, respectively for different strength intervals.

Each of these are then fitted to a straight line Y = A(r1/r2) + B, such as an upper limit line $Y_{upper} = A_{upper}(r1/r2) + B_{upper}$, and an lower limit line $Y_{lower} = A_{lower}(r1/r2) + Blower$, and the heat exchanger plates are then designed to have the dimples designed to fall within $Y_{upper}$ and $Y_{lower}$.

**Claims**

1. A plate heat exchanger comprising a plurality of plates which are stacked in a stacking direction, each plate defining a first set of dimples and a second set of dimples in opposite directions, each dimple of the first set of dimples forming a first contact face arranged against a contact face of an adjacent plate, and each dimple of the second set of dimples forming a second contact face arranged against a contact face of an adjacent plate, the dimples are arranged in a matrix pattern with a distance X1 between centers of dimples in adjacent rows and a distance X2 between centers of dimples in adjacent columns, where the dimples have a circumference C at the contact face and **characterised in that** C/X1 is in the range of 1,03-2,27.

2. A plate heat exchanger according to claim 1, where each dimple form a distance, r1 from its center to the edge of its contact face in the shortest direction towards the center of a dimple in the adjacent row, and where each dimple form a distance, r2 from its center to the edge of its contact face in the shortest direction towards the center of a dimple in the adjacent column, where C/x1 is selected to be between an upper and a lower boundary, the upper boundary being defined by a function of -0,23*(r1/r2) +2,50, and the lower boundary being defined by a function of -0,02*(r1/r2) + 1,10.

3. A plate heat exchanger according to claim 1, where each dimple form a distance, r1 from its center to the edge of its contact face in the shortest direction towards the center of a dimple in the adjacent row, and where each dimple form a distance, r2 from its center to the edge of its contact face in the shortest direction towards the center of a dimple in the adjacent column, where C/x2 is selected to be between an upper and a lower boundary, the upper boundary being defined by a function of 0,98*(r1/r2) +1,38, and the lower boundary being defined by a function of 0,22*(r1/r2) + 0,88.

4. A plate heat exchanger according to any of the preceding claims, where each contact face of the first set of contact faces forms at least a first and a second perpendicular axis of symmetry

5. A plate heat exchanger according to claim 4, where the first and the second perpendicular axis of symmetry having different length.

6. A plate heat exchanger according to claim 5 where the length of the first axis is at most 4 times longer than the other axis.

7. A plate heat exchanger according to any of the preceding claims, where the contact faces of the first set of contact faces are arranged against the contact faces of a second set of contact faces of the adjacent plate.

8. A plate heat exchanger according to any of the preceding claims, where the plates are identical.

9. A plate heat exchanger according to any of the preceding claims, where C/X2 is in the range of 1,10-4,32.

10. A plate heat exchanger according to any of the preceding claims, where the dimples have a circumference C and where C/X1 is in the range of 1,1-2,3.

11. A plate heat exchanger according to any of the preceding claims where C/X2 is in the range of 1,2-4,0.

12. A plate heat exchanger according to any of the preceding claims, wherein the plates are held together by an external force.

13. A plate heat exchanger according to any of the preceding claims, wherein, the first contact faces have a first and a second axes of symmetry, the first and second axes of symmetry being perpendicular to each other and the axes of symmetry having different length.

14. A plate for a plate heat exchanger, the plate defining a first set of dimples and a second set of dimples in opposite directions, each dimple of the first set of dimples forming a first contact face arranged against a contact face of an adjacent plate, and each dimple of the second set of dimples forming a second contact face arranged against a contact face of an adjacent plate, the dimples are arranged in a matrix pattern with a distance X1 between centers of dimples in adjacent rows and a distance X2 between centers of dimples in adjacent columns, where the dimples have a circumference C at the contact face and **characterised in that** C/X1 is in the range of 1,03-2,27.

15. A plate according to claim 14, where the dimples have a circumference C and where C/X1 is in the range of 1,1-2,3.

16. A plate for a plate heat exchanger according to claim 14 or 15, where C/X2 is in the range of 1,10-4,32.

17. A plate for a plate heat exchanger according to any of claims 14-16, where C/X2 is in the range of 1,2-4,0.

18. A plate for a heat exchanger according to any of claims 14 - 17, where each dimple form a distance, r1 from its center to the edge of its contact face in the shortest direction towards the center of a dimple in the adjacent row, and where each dimple form a distance, r2 from its center to the edge of its contact face in the shortest direction towards the center of a dimple in the adjacent column, where C/x1 is selected to be between an upper and a lower boundary, the upper boundary being defined by a function of -0,23*(r1/r2) +2,50, and the lower boundary being defined by a function of -0,02*(r1/r2) + 1,10.

19. A plate for a heat exchanger according to claims 14-18, where each dimple form a distance, r1 from its center to the edge of its contact face in the shortest direction towards the center of a dimple in the adjacent row, and where each dimple form a distance, r2 from its center to the edge of its contact face in the shortest direction towards the center of a dimple in the adjacent column, where C/x2 is selected to be between an upper and a lower boundary, the upper boundary being defined by a function of 0,98*(r1/r2) +1,38, and the lower boundary being defined by a function of 0,22*(r1/r2) + 0,88.

**Patentansprüche**

1. Plattenwärmetauscher, umfassend eine Vielzahl von Platten, die in einer Stapelrichtung gestapelt sind, wobei jede Platte eine erste Menge von Vertiefungen und eine zweite Menge von Vertiefungen in entgegengesetzter Richtung definiert, wobei jede Vertiefung der ersten Menge von Vertiefungen eine erste Kontaktfläche bildet, die gegen eine Kontaktfläche einer benachbarten Platte angeordnet ist, und jede Vertiefung der zweiten Menge von Vertiefungen eine zweite Kontaktfläche bildet, die gegen eine Kontaktfläche einer benachbarten Platte angeordnet ist, wobei die Vertiefungen in einem Matrixmuster mit einem Abstand X1 zwischen den Mittelpunkten der Vertiefungen in benachbarten Zeilen und einem Abstand X2 zwischen den Mittelpunkten der Vertiefungen in benachbarten Spalten angeordnet sind, wobei die Vertiefungen einen Umfang C an der Kontaktfläche aufweisen, und **dadurch gekennzeichnet, dass** C/X1 im Bereich von 1,03 bis 2,27 liegt.

2. Plattenwärmetauscher nach Anspruch 1, wobei jede Vertiefung einen Abstand r1 von ihrem Mittelpunkt zu dem Rand ihrer Kontaktfläche in der kürzesten Richtung zu dem Mittelpunkt einer Vertiefung in der benachbarten Zeile bildet und wobei jede Vertiefung einen Abstand r2 von ihrem Mittelpunkt zu dem Rand ihrer Kontaktfläche in der kürzesten Richtung zu dem Mittelpunkt einer Vertiefung in der benachbarten Spalte bildet, wobei C/x1 so gewählt ist, dass es zwischen einem oberen und einem unteren Grenzwert liegt, wobei der obere Grenzwert durch eine Funktion von -0,23*(r1/r2) + 2,50 definiert ist und der untere Grenzwert durch eine Funktion von -0,02*(r1/r2) + 1,10 definiert ist.

3. Plattenwärmetauscher nach Anspruch 1, wobei jede Vertiefung einen Abstand r1 von ihrem Mittelpunkt zu dem Rand ihrer Kontaktfläche in der kürzesten Richtung zu dem Mittelpunkt einer Vertiefung in der benachbarten Zeile bildet und wobei jede Vertiefung einen Abstand r2 von ihrem Mittelpunkt zu dem Rand ihrer Kontaktfläche in der kürzesten Richtung zu dem Mittelpunkt einer Vertiefung in der benachbarten Spalte bildet, wobei C/x2 so gewählt ist, dass es zwischen einem oberen und einem unteren Grenzwert liegt, wobei der obere Grenzwert durch eine Funktion von 0,98*(r1/r2) + 1,38 definiert ist und der untere Grenzwert durch eine Funktion von 0,22*(r1/r2) + 0,88 definiert ist.

4. Plattenwärmetauscher nach einem der vorhergehenden Ansprüche, wobei die Kontaktflächen der ersten Menge von Kontaktflächen jeweils wenigstens eine erste und eine zweite rechtwinklige Symmetrieachse bilden.

5. Plattenwärmetauscher nach Anspruch 4, wobei die erste und die zweite rechtwinklige Symmetrieachse eine unterschiedliche Länge aufweisen.

6. Plattenwärmetauscher nach Anspruch 5, wobei die Länge der ersten Achse höchstens 4 Mal so lang wie die andere Achse ist.

7. Plattenwärmetauscher nach einem der vorhergehenden Ansprüche, wobei die Kontaktflächen der ersten Menge von Kontaktflächen gegen die Kontaktflächen einer zweiten Menge von Kontaktflächen der benachbarten Platte angeordnet sind.

8. Plattenwärmetauscher nach einem der vorhergehenden Ansprüche, wobei die Platten identisch sind.

9. Plattenwärmetauscher nach einem der vorhergehenden Ansprüche, wobei C/X2 im Bereich von 1,10 bis 4,32 liegt.

10. Plattenwärmetauscher nach einem der vorhergehenden Ansprüche, wobei die Vertiefungen einen Umfang C aufweisen und wobei C/X1 im Bereich von 1,1 bis 2,3 liegt.

11. Plattenwärmetauscher nach einem der vorhergehenden Ansprüche, wobei C/X2 im Bereich von 1,2 bis 4,0 liegt.

12. Plattenwärmetauscher nach einem der vorhergehenden Ansprüche, wobei die Platten durch eine äußere Kraft zusammengehalten werden.

13. Plattenwärmetauscher nach einem der vorhergehenden Ansprüche, wobei die ersten Kontaktflächen eine erste und eine zweite Symmetrieachse aufweisen, wobei die erste und die zweite Symmetrieachse zueinander rechtwinklig sind und die Symmetrieachsen eine unterschiedliche Länge aufweisen.

14. Platte für einen Plattenwärmetauscher, wobei die Platte eine erste Menge von Vertiefungen und eine zweite Menge von Vertiefungen in entgegengesetzter Richtung definiert, wobei jede Vertiefung der ersten Menge von Vertiefungen eine erste Kontaktfläche bildet, die gegen eine Kontaktfläche einer benachbarten Platte angeordnet ist, und jede Vertiefung der zweiten Menge von Vertiefungen eine zweite Kontaktfläche bildet, die gegen eine Kontaktfläche einer benachbarten Platte angeordnet ist, wobei die Vertiefungen in einem Matrixmuster mit einem Abstand X1 zwischen den Mittelpunkten der Vertiefungen in benachbarten Zeilen und einem Abstand X2 zwischen den Mittelpunkten der Vertiefungen in benachbarten Spalten angeordnet sind, wobei die Vertiefungen einen Umfang C an der Kontaktfläche aufweisen, und **dadurch gekennzeichnet, dass** C/X1 im Bereich von 1,03 bis 2,27 liegt.

15. Platte nach Anspruch 14, wobei die Vertiefungen einen Umfang C aufweisen und wobei C/X1 im Bereich von 1,1 bis 2,3 liegt.

16. Platte für einen Plattenwärmetauscher nach Anspruch 14 oder 15, wobei C/X2 im Bereich von 1,10 bis 4,32 liegt.

17. Platte für einen Plattenwärmetauscher nach einem der Ansprüche 14 bis 16, wobei C/X2 im Bereich von 1,2 bis 4,0 liegt.

18. Platte für einen Wärmetauscher nach einem der Ansprüche 14 bis 17, wobei jede Vertiefung einen Abstand r1 von ihrem Mittelpunkt zu dem Rand ihrer Kontaktfläche in der kürzesten Richtung zu dem Mittelpunkt einer Vertiefung in der benachbarten Zeile bildet und wobei jede Vertiefung einen Abstand r2 von ihrem Mittelpunkt zu dem Rand ihrer Kontaktfläche in der kürzesten Richtung zu dem Mittelpunkt einer Vertiefung in der benachbarten Spalte bildet, wobei C/x1 so gewählt ist, dass es zwischen einem oberen und einem unteren Grenzwert liegt, wobei der obere Grenzwert durch eine Funktion von -0,23*(r1/r2) + 2,50 definiert ist und der untere Grenzwert durch eine Funktion von -0,02*(r1/r2) + 1,10 definiert ist.

19. Platte für einen Wärmetauscher nach den Ansprüchen 14 bis 18, wobei jede Vertiefung einen Abstand r1 von ihrem Mittelpunkt zu dem Rand ihrer Kontaktfläche in der kürzesten Richtung zu dem Mittelpunkt einer Vertiefung in der benachbarten Zeile bildet und wobei jede Vertiefung einen Abstand r2 von ihrem Mittelpunkt zu dem Rand ihrer Kontaktfläche in der kürzesten Richtung zu dem Mittelpunkt einer Vertiefung in der benachbarten Spalte bildet, wobei C/x2 so gewählt ist, dass es zwischen einem oberen und einem unteren Grenzwert liegt, wobei der obere Grenzwert durch eine Funktion von 0,98*(r1/r2) + 1,38 definiert ist und der untere Grenzwert durch eine Funktion von 0,22*(r1/r2) + 0,88 definiert ist.

**Revendications**

1. Échangeur thermique de plaque comprenant une pluralité de plaques qui sont empilées dans une direction d'empilement, chaque plaque définissant un premier ensemble d'alvéoles et un second ensemble d'alvéoles dans des directions opposées, chaque alvéole du premier ensemble d'alvéoles formant une première surface de contact disposée contre une surface de contact d'une plaque adjacente, et chaque alvéole du second ensemble d'alvéoles formant une seconde surface de contact disposée contre une surface de contact d'une plaque adjacente, les alvéoles sont disposées selon un motif matriciel avec une distance X1 entre les centres des alvéoles dans les rangées adjacentes et une distance X2 entre les centres des alvéoles dans les colonnes adjacentes, les alvéoles ayant une circonférence sur la surface de contact et **caractérisé en ce que** C/X1 est compris entre 1,03 et 2,27.

2. Échangeur thermique de plaque selon la revendication 1, dans lequel chaque alvéole forme une distance, r1 depuis son centre jusqu'au bord de sa surface de contact dans la direction la plus courte vers le centre d'une alvéole dans la rangée adjacente, et dans lequel chaque alvéole forme une distance, r2 depuis son centre jusqu'au bord de sa surface de contact dans la direction la plus courte vers le centre d'une alvéole dans la colonne adjacente, où C/xl est choisi entre une limite supérieure et une limite inférieure, la limite supérieure étant définie par une fonction -0,23*(r1/r2)+2,50, et la limite inférieure étant définie par une fonction -0,02*(r1/r2)+1,10.

3. Échangeur thermique de plaque selon la revendication 1, dans lequel chaque alvéole forme une distance, r1 depuis son centre jusqu'au bord de sa surface de contact dans la direction la plus courte vers le centre d'une alvéole dans la rangée adjacente, et dans lequel chaque alvéole forme une distance, r2 depuis son centre jusqu'au bord de sa surface de contact dans la direction la plus courte vers le centre d'une alvéole dans la colonne adjacente, où C/x2 est choisi entre une limite supérieure et une limite inférieure, la limite supérieure étant définie par une fonction 0,98*(r1/r2)+1,38, et la limite inférieure étant définie par une fonction 0,22*(r1/r2)+0,88.

4. Échangeur thermique de plaque selon l'une quelconque des revendications précédentes, dans lequel chaque surface de contact du premier ensemble de surfaces de contact forme au moins des premier et second axes perpendiculaires de symétrie.

5. Échangeur thermique de plaque selon la revendication 4, dans lequel le premier axe perpendiculaire de symétrie et le second axe perpendiculaire de symétrie ont des longueurs différentes.

6. Échangeur thermique de plaque selon la revendication 5 dans lequel la longueur du premier axe est au maximum 4 fois supérieure à celle de l'autre axe.

7. Échangeur thermique de plaque selon l'une quelconque des revendications précédentes, dans lequel les surfaces de contact du premier ensemble de surfaces de contact sont disposées contre les surfaces de contact d'un second ensemble de surfaces de contact de la plaque adjacente.

8. Échangeur thermique de plaque selon l'une quelconque des revendications précédentes, dans lequel les plaques sont identiques.

9. Échangeur thermique de plaque selon l'une quelconque des revendications précédentes, dans lequel C/X2 est compris entre 1,10 et 4,32.

10. Échangeur thermique de plaque selon l'une quelconque des revendications précédentes, dans lequel les alvéoles ont une circonférence C et dans lequel C/Xl est compris entre 1,1 et 2,3.

11. Échangeur thermique de plaque selon l'une quelconque des revendications précédentes dans lequel C/X2 est compris entre 1,2 et 4,0.

12. Échangeur thermique de plaque selon l'une quelconque des revendications précédentes, dans lequel les plaques sont maintenues ensemble par une force extérieure.

13. Échangeur thermique de plaque selon l'une quelconque des revendications précédentes, dans lequel les premières surfaces de contact ont des premier et second axes de symétrie, les premier et second axes de symétrie étant perpendiculaires entre eux et les axes de symétrie ayant des longueurs différentes.

14. Plaque pour un échangeur thermique de plaque, la plaque un premier ensemble d'alvéoles et un second ensemble d'alvéoles dans des directions opposées, chaque alvéole du premier ensemble d'alvéoles formant une première face de contact disposée contre une face de contact d'une plaque adjacente, et chaque alvéole du second ensemble d'alvéoles formant une seconde face de contact disposée contre une face de contact d'une plaque adjacente, les alvéoles sont disposées selon un motif matriciel avec une distance X1 entre les centres des alvéoles dans les rangées adjacentes et une distance X2 entre les centres des alvéoles dans les colonnes adjacentes, les alvéoles ayant une circonférence C sur la face de contact et **caractérisé en ce que** C/X1 est compris entre 1,03 et 2,27.

15. Plaque selon la revendication 14, dans laquelle les alvéoles ont une circonférence C et dans laquelle C/X1 est compris entre 1,1 et 2,3.

16. Plaque pour échangeur thermique de plaque selon la revendication 14 ou 15, dans laquelle C/X2 est compris entre 1,10 et 4,32.

17. Plaque pour échangeur de chaleur à plaque selon l'une quelconque des revendications 14-16, dans laquelle C/X2 est compris entre 1,2 et 4,0.

18. Plaque pour échangeur thermique de plaque selon l'une des revendications 14 à 17, dans laquelle chaque alvéole forme une distance, r1 depuis son centre jusqu'au bord de sa surface de contact dans la direction la plus courte vers le centre d'une alvéole dans la rangée adjacente, et dans laquelle chaque alvéole forme une distance, r2 depuis son centre jusqu'au bord de sa surface de contact dans la direction la plus courte vers le centre d'une alvéole dans la colonne adjacente,
dans laquelle C/xl est choisi entre une limite supérieure et une limite inférieure, la limite supérieure étant définie par une fonction - 0,23*(r1/r2)+2,50, et la limite inférieure étant définie par une fonction -0,02*(r1/r2)+1,10.

19. Plaque pour échangeur thermique selon les revendications 14 à 18, dans laquelle chaque alvéole forme une distance, r1 depuis son centre jusqu'au bord de sa surface de contact dans la direction la plus courte vers le centre d'une alvéole dans la rangée adjacente, et dans laquelle chaque alvéole forme une distance, r2 depuis son centre jusqu'au bord de sa surface de contact dans la direction la plus courte vers le centre d'une alvéole dans la colonne adjacente, où C/x2 est choisi entre une limite supérieure et une limite inférieure, la limite supérieure étant définie par une fonction 0,98*(r1/r2)+1,38, et la limite inférieure étant définie par une fonction 0,22*(r1/r2)+0,88.

Fig. 1

Fig. 2

Fig. 3

Fig. 4

Fig. 5a

Fig. 5b

Fig. 6

Fig. 7

Fig. 8

Fig. 9

Fig. 10

**Strength (90-100% interval)**

Fig. 11

**Strength (90-100% interval)**

Fig. 12

**Strength (90-100% interval)**

Fig. 10a

Fig. 11a

Fig. 12a

**Fig. 13**

**Fig. 14**

Fig. 15

Fig. 16

Fig. 17

Fig. 18

Fig. 19

Fig. 20

**Linear regression formulas**

| C/x = A (r1/r2) + B | | | | | | | | | For interval r1/r1 [1 to 3] | |
|---|---|---|---|---|---|---|---|---|---|---|
| | | Lower limit | | | Max. Strength | | | Upper limit | | |
| **Strength Interval C/x1** | | A | B | | A | B | | A | B | | C/x1 min | C/x1 max |
| 85-100% | | -0,022 | 1,098 | | -0,107 | 1,820 | | -0,228 | 2,502 | | 1,03 | 2,27 |
| 90-100% | | -0,029 | 1,227 | | -0,107 | 1,820 | | -0,205 | 2,382 | | 1,14 | 2,18 |
| 95-100% | | -0,045 | 1,387 | | -0,107 | 1,820 | | -0,174 | 2,220 | | 1,25 | 2,05 |
| | | | | | | | | | | | | |
| **Strength Interval C/x2** | | A | B | | A | B | | A | B | | C/x2 min | C/x2 max |
| 85-100% | | 0,218 | 0,881 | | 0,539 | 1,229 | | 0,980 | 1,375 | | 1,10 | 4,32 |
| 90-100% | | 0,275 | 0,951 | | 0,539 | 1,229 | | 0,892 | 1,361 | | 1,23 | 4,04 |
| 95-100% | | 0,347 | 1,030 | | 0,539 | 1,229 | | 0,782 | 1,335 | | 1,38 | 3,68 |

Fig. 21

**EP 3 015 809 B1**

## REFERENCES CITED IN THE DESCRIPTION

### Patent documents cited in the description

- US 6221463 B
- EP 0650024 A
- EP 2455694 A